# EUROPEAN PATENT APPLICATION

(11) **EP 3 147 222 A1**
(43) Date of publication of application: **29.03.2017**
(21) Application number: 15186870.0
(22) Date of filing: 25.09.2015
(51) Int. Cl.: B64F 1/02, B64F 1/36

(54) **LANDING ARRANGEMENT FOR REDUCING A DISTANCE ERROR OF A LANDING AIRCRAFT HAVING A HIGH LIFT-TO-DRAG RATION**

(71) Applicant: Airbus DS GmbH, 82024 Taufkirchen (DE)
(72) Inventor: Closs, Dr. Martin, 80336 München (DE)
(74) Representative: Schicker, Silvia

(57) **Abstract**

A landing arrangement for reducing a distance error of a landing aircraft having a high lift-to-drag ratio is disclosed. The landing arrangement comprises a longitudinal landing device (200, 230) having a surface adapted to allow gliding or rolling of the aircraft thereon, and a sloping device (240, 250) configured to set an angle of the longitudinal landing device (200, 230) with respect to a horizontal plane.

## Description

The present invention relates to a landing arrangement for a landing aircraft. In particular, the present invention relates to a landing arrangement for reducing the distance error of a landing aircraft having a high lift-to-drag ratio.

Particular types of aircrafts have a high lift-to-drag ratio (L/D value), which is the amount of lift generated by an aircraft, and in particular by its wing(s), divided by the aerodynamic drag occurring when the aircraft/wing(s) move(s) through air. One of these aircraft types is a high altitude long endurance aircraft (HALE aircraft), such as a high altitude pseudo-satellite aircraft (HAPS aircraft). The high L/D value is required to minimize power/fuel consumption and allow long endurance flights at high altitudes of 15,000 m and more, e.g. flights in the stratosphere.

The high L/D value and resulting shallow glide slope, however, have the drawback that the aircraft also requires a long landing distance, i.e. the distance required for the aircraft to touch ground even when the aircraft is only a few meters above ground. Furthermore, when approaching for landing a small altitude error of the aircraft results in a great distance error, i.e. the deviation of the actual position where the aircraft touches ground from a planned landing position.

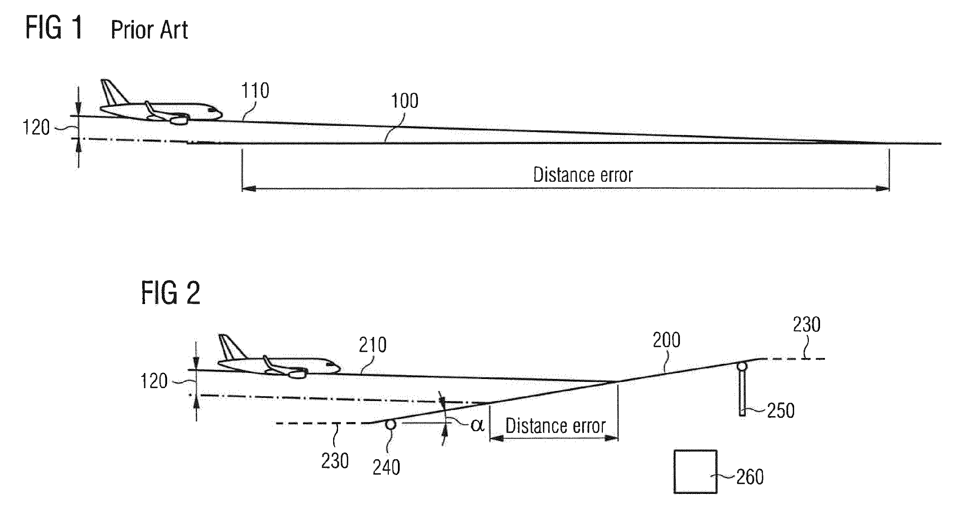

This is illustrated in Figure 1, where an aircraft is depicted during a landing approach. Line 100 in Figure 1 illustrates a landing runway and line 110 illustrates an actual glide path of the aircraft. However, the aircraft is supposed to glide on the path drawn as a chain dotted line below line 110. Due to an altitude error 120, for example caused by a stronger headwind, the aircraft will touch ground way further down the runway than originally planned. The corresponding distance error is illustrated in Figure 1. Thus, long landing runways are required when landing this particular type of aircraft.

The present invention is directed to the object of providing a possibility of reducing the distance error.

This object is solved by a landing arrangement according to claim 1.

A landing arrangement for reducing a distance error of a landing aircraft having a high lift-to-drag ratio comprises a longitudinal landing device having a surface adapted to allow gliding or rolling of the aircraft thereon, and a sloping device configured to set an angle of the longitudinal landing device with respect to a horizontal plane. The longitudinal landing device is sloped/inclined with respect to the horizontal plane in such a manner, that the aircraft, once landed, glides or rolls uphill on the longitudinal landing device. This sloped/inclined longitudinal landing device can significantly reduce the distance error caused by an altitude error of the aircraft, since the aircraft will touch ground (lands on the longitudinal landing device) earlier than on a normal horizontal runway.

Previous solutions of reducing the distance error employ structures at the aircraft increasing the drag while landing. For instance, aircrafts are equipped with landing aids, such as flaps, spoilers or landing gear which would reduce the L/D value during landing. The present invention, on the other hand, does not require such additional structures. Instead of adding an extra load and complex structures to the aircraft, which are only required during landing, the present invention provides a solution based on modifying the landing runway. This allows the aircraft to be built lighter, which leads to less power/fuel consumption and a longer endurance of the flight.

The sloping device can be fixed providing for a fixed angle of the longitudinal landing device. Alternatively, the sloping device may be a temporarily steady but replaceable structure, so that different sloping devices may be employed to bring the longitudinal landing device into a specific angle with respect to the horizontal plane. For example, the sloping device may constitute of one or more columns arranged at one end of the longitudinal landing device and under it to achieve the required angle. The columns may be of different lengths each leading to a different angle.

Alternatively or additionally, the landing arrangement may further comprise a control system configured to detect a glide path of the aircraft, to determine a landing position of the aircraft on the longitudinal landing device based on the detected glide path, and to set the angle of the longitudinal landing device in dependence of the determined landing position. To detect the glide path of the aircraft, the control system may be connected to or may comprise one or more sensors detecting the position of the aircraft. When detecting the position of the aircraft over a certain period of time, the velocity of the aircraft as well as the glide slope and glide path can be calculated. Alternatively, the sensors may be capable of detecting the position, velocity and direction of movement of the aircraft and provide a control system with the corresponding data. Examples of sensors are radar sensors, LiDAR sensors, LaDAR sensors or other optical sensors including cameras.

The control system may further be configured to slope/incline a particular portion of the longitudinal landing device. This particular portion includes the determined landing position of the aircraft. Thus, it is not required that the entire longitudinal landing device is inclined with respect to the horizontal plane. It is sufficient that a particular portion in the longitudinal direction of the longitudinal landing device is sloped/inclined. Preferably, the determined landing position of the aircraft is at or close of the beginning of the slope of the longitudinal landing device, i.e. in the flight direction of the aircraft the longitudinal landing device begins to slope/incline at or around the landing position, so that the aircraft, once landed, glides or rolls uphill the longitudinal landing device. In order to achieve such partial slope of the longitudinal landing device, a plurality of sloping devices or a plurality of sloping device components is arranged along the longitudinal direction under the longitudinal landing device. The control system then adjusts only some of the plurality of sloping devices or components, so that the partial slope is achieved and the angle of the longitudinal landing device is set for the particular portion.

According to a certain aspect, the landing arrangement is a floating device. Such floating device may be capable of floating and maneuvering on a lake or the sea. Thus, the landing arrangement can easily be brought to a landing position. Furthermore, the floating landing arrangement can also be maneuvered, so that the longitudinal landing device is arranged parallel to the wind direction. This allows landing the aircraft always against the wind.

Furthermore, the sloping device may comprise at least one balance tank coupled to the longitudinal landing device. The landing arrangement may further comprise a pumping system configured to pump liquid into and out of the at least one balance tank. For instance, the pumped fluid may be the fluid in which the landing arrangement floats, such as water. By adjusting a fluid level in the at least one balance tank the angle of the longitudinal landing device with respect to the horizontal plane can be set. Each of the at least one balance tank also floats, so that a variation of the fluid level within each of the at least one balance tank corresponds to a lifting and lowering of the respective balance tank. Due to a coupling of each balance tank and the longitudinal landing device the angle of the longitudinal landing device with respect to the horizontal plane can be set in dependence of the fluid level.

Alternatively or additionally, the sloping device may comprise at least one hydraulic post coupled to the longitudinal landing device and configured to rise from a neutral position at which the longitudinal landing device is parallel to the horizontal plane to a full extended position at which the angle of the longitudinal landing device with respect to the horizontal plane has a maximum. The maximum of the angle of the longitudinal landing device applies to the entire longitudinal landing device as well as the above-mentioned portion of the longitudinal landing device. In case of a slope of only a portion of the longitudinal landing device the maximum angle, of course, will be greater in value than the maximum angle of the entire longitudinal landing device. If the hydraulic post is fully extended, the maximum angle depends on the length of the longitudinal landing device which is sloped/inclined. For a partial slope/incline of the longitudinal landing device, a plurality of hydraulic posts may be arranged along and in the longitudinal direction of the longitudinal landing device. Thus, depending on which hydraulic post rises the portion of the longitudinal landing device which will be sloped/inclined can be chosen.

The at least one hydraulic post may be controlled by the control system, so that a rising level (the amount of extent of the hydraulic post) can be adjusted by the control system.

A preferred embodiment of the invention will now be explained with respect to the drawings in which
- Figure 1: is a schematic drawing illustrating a landing aircraft and a resulting distance error according to the prior art, and
- Figure 2: is a schematic drawing illustrating an aircraft landing on a landing arrangement according to the present disclosure.

As outlined above, figure 1 is a schematic drawing of an aircraft landing on a conventional runway 100. Any altitude error 120 of the aircraft leads to a deviated glide path 110, which results in a distance error being a multiple of the altitude error 120. For example, an altitude error 120 of 1 m can easily translate into a distance error of 30 m. Thus, the runway 100 has to be quite long in order to compensate for any altitude errors 120.

The present disclosure, on the other hand, reduces the distance error by providing a particular landing arrangement. In detail, as illustrated in Figure 2 the landing arrangement includes a longitudinal landing device 200, 230. This longitudinal landing device 200, 230 has a surface adapted to allow gliding or rolling of an aircraft thereon. The landing arrangement is particularly employable for an aircraft with a high lift-to-drag ratio, such as a high altitude pseudo-satellite (HAPS) aircraft. This type of aircraft has a long span, so that it is quite likely that the aircraft might first touch ground with an airfoil before a body or fuselage of the aircraft lands. Thus, the surface of the longitudinal landing device 200, 230 is particularly adapted to allow a smooth gliding or rolling of the aircraft on the longitudinal landing device 200, 230. Since this type of aircraft may also be built without any landing gear, the surface of the longitudinal landing device 200, 230 is also adapted to allow gliding of the entire aircraft (including the body/fuselage) on the longitudinal landing device 200, 230.

In Figure 2 a planned glide path is depicted as a chain dotted line. However, as explained above an altitude error 220 may occur. For example, a strong head wind may influence the lift of the aircraft due to the faster air speeds over/around the airfoil. Thus, the actual glide path 210 may be higher than the expected or planned glide path. Of course, the actual glide path 210 may also be lower than the expected or planned glide path, for example, due to downwind.

In order to reduce the distance error resulting from the altitude error 220, the landing arrangement further includes a sloping device 240, 250 configured to set an angle (α) of the longitudinal landing device 200, 230 with respect to a horizontal plane. The sloping device 240, 250 may include a plurality of components, two of which are schematically illustrated in Figure 2 and denoted as 240 and 250. It is noted that the number of components of the sloping device 240, 250 is not limited to the illustrated two components. The sloping device may be fixed, so that a particular angle (α) of the longitudinal landing device 200, 230 is set. Alternatively, the sloping device or at least one of its components 240, 250 can be adjustable. By rising one of the components 250, the longitudinal landing device 200, 230 can be sloped or inclined.

The landing arrangement may also include a control system 260 configured to detect a glide path 210 of the aircraft. The detecting of the glide path 210 may be accomplished via sensors and sensor signals representing data or information about the position of the aircraft with respect to the longitudinal landing device 200, 230. For instance, radar sensors, LiDAR sensors, LaDAR sensors etc. may be employed. Based on the detected glide path 210 the control system 260 determines a landing position of the aircraft on the longitudinal landing device 200, 230. Depending on the determined landing position the control system 260 sets the angle (α) of the longitudinal landing device. This setting of the angle (α) leads to a reduction of the distance error.

This can be derived from a comparison of Figures 1 and 2. In particular, the landing position determined by the control system 260 would be the intersection of gliding path 110 and the runway 100 in Figure 1. In order to reduce the distance error, the control system 260 sets the angle (α) of the longitudinal landing device 200, 230 by operating and/or manipulating the sloping device 240, 250. Thereby, the landing position changes to the intersection of glide path 210 and longitudinal landing device 200 illustrated in Figure 2. As can be seen from Figures 1 and 2, the distance error is significantly reduced. For instance, the distance error may be reduced by a factor of seven or more depending on the set angle (α) of the longitudinal landing device 200, 230.

It is noted that the longitudinal landing device 200, 230 does not necessarily be in a horizontal plane before the control system 260 detects the glide path 210 and determines the landing position of the aircraft. Rather, the longitudinal landing device 200, 230 may already be at a particular angle (α) with respect to the horizontal plane. The control system 260 can then only slightly adjust the angle (α) or may not change it at all.

Alternatively or additionally, the longitudinal landing device 200, 230 may consist of several portions, which can be sloped or inclined separately. In Figure 2 the longitudinal landing device is illustrated as having two portions 230 which are parallel to the horizontal plane, while an intermediate portion 200 of the longitudinal landing device is sloped/inclined. Any form of the longitudinal landing device 200, 230 can be achieved, if the sloping device has a plurality of components 240, 250. The components 240, 250 can be separately controlled (adjusted in height) by the control system 260. As illustrated in Figure 2, a first component 240 is at a neutral position and a second component 250 is at an extended position. Thus, the longitudinal landing device 200 between the two components 240, 250 is sloped/inclined. If at least two of the components of the sloping device 240, 250 are at the neutral position or the same extended position, the intermediate longitudinal landing device 200, 230 is parallel to the horizontal plane, i.e. angle α = 0 (zero). At least one component 250 of the components can rise from a neutral position to a full extended position at which the angle (α) of the longitudinal landing device 200, 230 with respect to the horizontal plane has a maximum (provided that a neighbouring component 240 is in the neutral position).

The sloping device 240, 250 may comprise at least one component implemented as a hydraulic post 250. Thus, the hydraulic post 250 can be adjusted in height according to a very fine grade, allowing a very precise adjustment of the angle (α) of the longitudinal landing device 200.

In accordance with an implementation of the present disclosure, the landing arrangement is a floating device. Such floating device can be brought to the location where the aircraft is supposed to land. The floating device is further easily maneuvered, in order to orient the longitudinal landing device 200, 230 in the landing direction of the aircraft.

The sloping device 240, 250 may comprise at least one balance tank coupled to the longitudinal landing device 200, 230. Each of the balance tanks is capable of floating and can be filled with a fluid, so that the height of the balance tank above the floating surface depends on the fluid level of the tank. The angle (α) of the longitudinal landing device 200, 230, therefore, can be set by regulating the fluid level within each of the tanks. With respect to Figure 2 the sloping device component 240 may either be a balance tank which is fully filled with liquid, so that the balance tank 240 is at a neutral position, or an uncontrolled floating device, which is always at this neutral position. The depicted sloping device component 250, on the other hand, is a balance tank that is substantially empty, so that the balance tank rises to its full extended position. Controlling the fluid level of each of the balance tanks 240, 250, for example by the control system 260, provides for setting the angle (α) of the longitudinal landing device 200, 230.

If the landing arrangement is a floating device, it is advantageous if the landing arrangement further comprises a pumping system configured to pump a fluid into and out of the at least one balance tank 240, 250. The pumped fluid may be the fluid on which the landing arrangement floats.

## Claims

1. A landing arrangement for reducing a distance error of a landing aircraft having a high lift-to-drag ratio, the landing arrangement comprising:
a longitudinal landing device (200, 230) having a surface adapted to allow gliding or rolling of the aircraft thereon; and
a sloping device (240, 250) configured to set an angle of the longitudinal landing device (200, 230) with respect to a horizontal plane.

2. The landing arrangement according to claim 1, further comprising:
a control system (260) configured to detect a glide path (210) of the aircraft,
determine a landing position of the aircraft on the longitudinal landing device (200, 230) based on the detected glide path (210) and set the angle of the longitudinal landing device (200, 230) in dependence of the determined landing position.

3. The landing arrangement according to claim 2, wherein the control system (260) is configured to incline a particular portion of the longitudinal landing device (200), the particular portion including the determined landing position of the aircraft.

4. The landing arrangement according to one of claims 1 to 3, wherein the landing arrangement is a floating device.

5. The landing arrangement according to claim 4, wherein the sloping device (240, 250) comprises at least one balance tank (250) coupled to the longitudinal landing device (200, 230), so that the angle of the longitudinal landing device (200, 230) with respect to the horizontal plane depends on a fluid level in the balance tank (250), and wherein the landing arrangement further comprises:
a pumping system configured to pump a fluid into and out of the at least one balance tank.

6. The landing arrangement according to one of claims 1 to 4, wherein the sloping device (240, 250) comprises at least one hydraulic post (250) coupled to the longitudinal landing device (200, 230) and configured to rise from a neutral position at which the longitudinal landing device (200, 230) is parallel to the horizontal plane to a full extended position at which the angle of the longitudinal landing device (200, 230) with respect to the horizontal plane has a maximum.

## Amended claims

### Amended claims in accordance with Rule 137(2) EPC.

1. A landing arrangement for reducing a distance error of a landing aircraft having a high lift-to-drag ratio, the landing arrangement comprising:
a longitudinal landing device (200, 230) having a surface adapted to allow gliding or rolling of the aircraft thereon; and
a sloping device (240, 250) configured to set an angle of the longitudinal landing device (200, 230) with respect to a horizontal plane.
**characterized by** a control system (260) configured to detect a glide path (210) of the aircraft, determine a landing position of the aircraft on the longitudinal landing device (200, 230) based on the detected glide path (210) and set the angle of the longitudinal landing device (200, 230) in dependence of the determined landing position.

2. The landing arrangement according to claim 1, wherein the control system (260) is configured to incline a particular portion of the longitudinal landing device (200), the particular portion including the determined landing position of the aircraft.

3. The landing arrangement according to claim 1 or 2, wherein the landing arrangement is a floating device.

4. The landing arrangement according to claim 3, wherein the sloping device (240, 250) comprises at least one balance tank (250) coupled to the longitudinal landing device (200, 230), so that the angle of the longitudinal landing device (200, 230) with respect to the horizontal plane depends on a fluid level in the balance tank (250), and wherein the landing arrangement further comprises:
a pumping system configured to pump a fluid into and out of the at least one balance tank.

5. The landing arrangement according to one of claims 1 to 3, wherein the sloping device (240, 250) comprises at least one hydraulic post (250) coupled to the longitudinal landing device (200, 230) and configured to rise from a neutral position at which the longitudinal landing device (200, 230) is parallel to the horizontal plane to a full extended position at which the angle of the longitudinal landing device (200, 230) with respect to the horizontal plane has a maximum.
